# EUROPEAN PATENT APPLICATION

(11) **EP 4 677 996 A1**
(43) Date of publication of application: **14.01.2026**
(21) Application number: 24187526.9
(22) Date of filing: 09.07.2024
(51) Int. Cl.: A01G 25/09, A01B 73/02

(54) **A MOBILE, ELECTRICALLY POWERED FIELD IRRIGATION APPARATUS**

(71) Applicant: WekoAgro Machinery A/S, 7441 Bording (DK)
(72) Inventor: BRARUP, Karsten Krusborg, 6800 Varde (DK)
(74) Representative: Zacco Denmark A/S

(57) **Abstract**

The present invention relates to a mobile, electrically powered field irrigation apparatus (1), comprising an on-board electrical storage (6) for storing electrical power, a frame (10) including: a) electrically driven wheels (12) or belts for moving the apparatus (1) across a field (F) in a field (F) irrigation mode of the apparatus (1), b) a reel (50) supported for rotation about an axis (51'), c) a flexible conduit (70) wound up on the reel (50) and configured for supplying irrigation water from a remote irrigation water supply (RIWS) to a plurality of irrigation water outlets (104), d) a reel drive (D1) for the rotation of said reel (50), and e) an electric drive (D2) for driving the electrically driven wheels (12) or belts in the field irrigation mode of the apparatus (1), at a ground speed of the apparatus (1) not exceeding 2 km/h at maximum, preferably not exceeding 1 km/h at maximum. Specifically, a boom structure (100) is coupled to the frame (10) and includes a first elongated boom section (110), a second elongated boom section (130) and, optionally, a central boom section (120) between the first and boom second sections (110, 130), each first and second boom section (110, 130) being turnable relative to the frame (10) between a first position adjacent a respective side of the frame (10) and a second, operative position extending out-wards away from the frame (10). The plurality of water outlets (104) are mounted to the first and second boom sections (110, 130) along a length thereof. A first electrical linear actuator (201) is rotatably attached at one end (220) to the first boom section (110), to provide for the turning of the first boom section (110) relative to the frame (10), and a second electrical linear actuator (202) is rotatably attached at one end (220) to the second boom section (130), to provide for the turning of the second boom section (130) relative to the frame (10), and the electrical linear actuators (201, 202) are electrically connected to said electrical storage (6) to be powered by stored electrical power, the electrical storage (6) preferably being mounted to the frame (10) or to the boom structure (100).

## Description

The present invention concerns a mobile, electrically powered field irrigation apparatus, comprising an on-board electrical storage for storing electrical power and a frame including: a) electrically driven wheels or belts for moving the apparatus across a field in a field irrigation mode of the apparatus, b) a reel supported for rotation about an axis, c) a flexible conduit wound up on the reel and configured for supplying irrigation water from a remote irrigation water supply to a plurality of irrigation water outlets, d) a reel drive for the rotation of the reel, and e) an electric drive for driving the electrically driven wheels or belts in the field irrigation mode of the apparatus, at a ground speed of the apparatus not exceeding 2 km/h at maximum, preferably not exceeding 1 km/h at maximum.

GB1099321, EP4140291 and WO2022/094626 disclose examples of mobile field irrigation apparatuses with sections of a boom structure extending parallel with and alongside the frame of the apparatus in a non-irrigation configuration/mode of the apparatus.

It is an object of the present invention to provide an improved apparatus of the aforementioned type, having i.a. a relatively long operating range.

This is achieved by the apparatus of the aforementioned type wherein a boom structure coupled to the frame includes a first elongated boom section, a second elongated boom section and, optionally, a central boom section between the first and boom second sections. Each first and second boom section is turnable relative to the frame about an upright axis at a respective first boom section coupling, between a first position adjacent a respective side of the frame, corresponding to a retracted non-irrigation mode, and a second, operative position extending outwards away from the frame, with a plurality of irrigation water outlets mounted to the first and second boom sections along a length thereof. A first electrical linear actuator is rotatably attached at one end to the first boom section, to provide for the turning of the first boom section relative to the frame, and a second electrical linear actuator is rotatably attached at one end to the second boom section, to provide for the turning of the second boom section relative to the frame, and the electrical linear actuators are electrically connected to the on-board electrical storage so as to be powered by stored electrical power, the electrical storage preferably being mounted to the frame or to the boom structure.

Preferably, the reel drive is an electric reel drive powered by the on-board electrical storage, and is activated for winding up the conduit in the field irrigation mode. Normally, the apparatus will be supported by the wheels and/or by the belts also when moving across the field in the non-irrigation mode.

By, according to the invention, the aforementioned actuators being electrical linear actuators, useful since the boom structure may have a relatively small weight per unit length due to the specified use of the apparatus, that are electrically connected to the electrical storage so as to be exclusively powered by stored electrical power, a reduction in the loads on the boom structure may be achieved in that no hydraulics with heavy hydraulic actuators is required for manipulating the two sections of the boom structure, since electrical linear actuators are preferably the sole means for driving the turning/folding of the boom structure.

In addition, by according to the invention using the on-board electrical storage to additionally and also exclusively power the wheel/belt drive and the reel drive, preferably independently of one another, with no use of any on-board hydraulics/pneumatics, a light weight apparatus allowing for long range operation in the field irrigation mode is provided.

Preferably, each boom section comprises two subsections, coupled to one another at a subsection coupling, and a mechanism is provided for folding the two subsections against one another, wherein an element of that mechanism is a rigid push/pull bar which, together with a length of the corresponding boom section, defines a triangular structure in the field irrigation mode, being transformable into a parallelogram structure when the corresponding first electrical linear actuator is actuated, for folding the boom section to a folded configuration in the non-irrigation mode.

In a further embodiment, the first and second boom sections each comprise a second subsection coupling and a third elongated subsection rotatably connected to the second subsection at the second subsection coupling, wherein the second and third subsections of each first and boom second section are turnable about an upright axis relative to one another between the folded configuration, where the second and third subsections are adjacent to one another, and the irrigation mode, wherein the third subsection is in extension of the second subsection, wherein a respective further electrical linear actuator connects the second and third subsections of each first and second boom section to provide for the relative turning of the second and third subsections, the respective further electrical linear actuators being electrically connected to the on-board electrical storage to be powered by stored electrical power.

When reference is made herein to an on-board battery/electrical storage for storing electrical power such a storage may be in the form of a single unit, or several sub-units.

### Brief description of the drawings

Fig. 1 is a perspective view of an embodiment of the apparatus of the invention, in a non-irrigation configuration/mode,
Fig. 2 is a perspective view of the apparatus of fig. 1 in an irrigation configuration/mode,
Figs. 3a-3c are side and top views a boom section of the apparatus, in an extended configuration and in a partially folded configuration,
Figs. 4a-4f are top and perspective views showing the transformation of the boom section of figs. 3a-3c into a fully folded configuration,
Figs. 5a-5c are detailed side views showing a lock mechanism, and
Figs. 6a-6d are views similar to figs. 5a-5c, without the use of the lock mechanism.

### Detailed description

Embodiments of the invention will now be explained in more detail below by reference to the drawings.

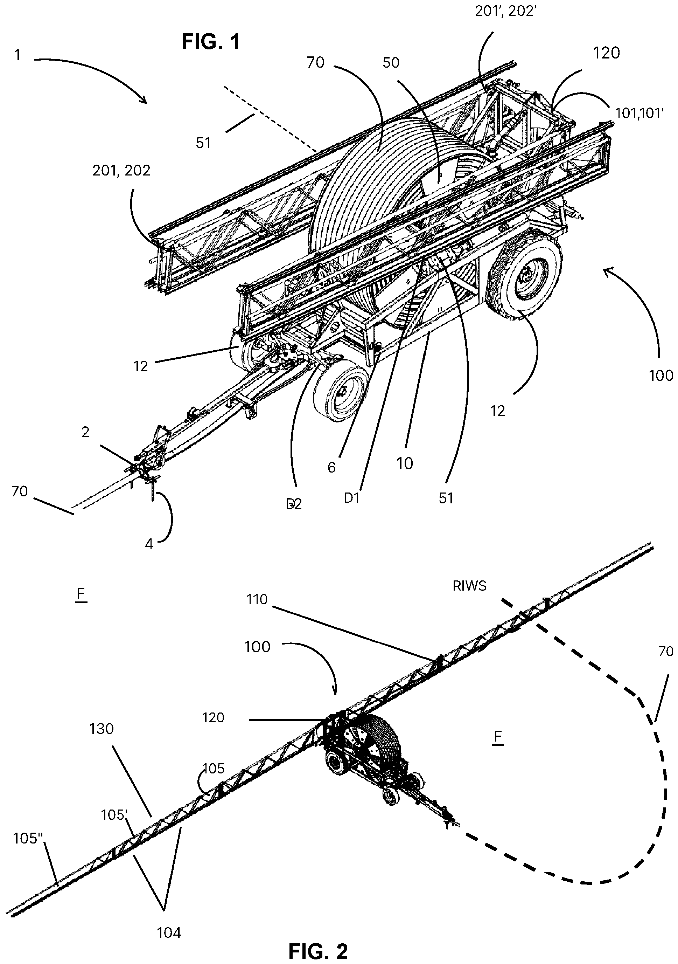

Fig. 1 is a perspective view of an electrically powered water irrigation apparatus 1 being in a non-irrigation configuration/mode with sections of a boom structure 100 extending parallel with and along a respective side of a frame 10 of the apparatus 1. The apparatus 1 comprises a highly schematically shown on-board battery/electrical storage 6 for storing electrical power, preferably being mounted to the frame 10 as shown and/or to the boom structure 100.

The frame 10 also carries a reel 50 that is rotationally supported on a central shaft (not shown) and that is driven for rotation about an axis 51 defined by the shaft. The axis 51 may as shown extend horizontally, or may extend vertically. A flexible irrigation water tube/conduit 70 is wound up on the reel 50 and is configured for supplying irrigation water from a fixed remote irrigation water supply RIWS to a plurality of nozzles defining respective irrigation water outlets 104 of the apparatus 1.

Mounted to the frame 10 is also a schematically shown electric reel drive D1 for bringing about rotation of the reel 50 about the aforementioned axis 51. In a less preferred embodiment, not discussed further herein, a mechanical reel drive D1 including a coupling between the wheels/belts 12 and the reel 50 may be provided for synchronised rotation of the latter.

Movement of the apparatus 1 in the shown non-irrigation configuration/mode is preferably brought about using a tractor (not shown) with a hitch attached to a coupling part 2 of the frame 10 of the apparatus 1. The tractor may move the apparatus 1 supported by wheels 12 or by belts (not shown) at any desired, reasonable ground speed, to an irrigation start position within a field F.

The wheels 12 or belts are also for an autonomous moving of the apparatus 1 across a field F in a field irrigation configuration/mode of the apparatus 1, shown in fig. 2. For this, also mounted to the frame 10 is a schematically shown electric wheel/belt drive D2 for driving the wheels 12 or belts in the field irrigation mode.

The wheel/belt drive D2 is so configured or controllable that in the field irrigation mode the apparatus 1 is moved by the wheel/belt drive D2 only, at a ground speed not exceeding 2 km/h at maximum, preferably not exceeding 1 km/h at maximum, across the field F. Rotation of the reel 50 is coordinated with the ground speed at which the apparatus 1 travels in the field irrigation mode, to keep the conduit 70 wound up on the reel 50 without slack. The aforementioned two electric drives D1, D2 are both powered exclusively by electrical power supplied by the on-board electrical storage 6.

In the field irrigation mode irrigation water flows in the conduit 70 from the remote irrigation water supply RIWS to exit the water outlets 104 that are mounted to the boom structure 100, more specifically along a first and a second elongated boom section 110, 130 thereof, which two boom sections 110, 130 extend outwards and away from a respective one of the two opposite sides of the frame 10, as shown in fig. 2.

Charging of the electrical storage 6 may have been previously carried out at a home station, and the apparatus 1 is initially moved, in the shown embodiment pushed, from the remote irrigation water supply RIWS to the irrigation start position within the field F. Supplementary charging of the electrical storage 6 may be by a generator connected to a turbine 5 driven by water flowing in the conduit 70 in the irrigation mode of the apparatus 1, as discussed in WO 2021/242249, and/or using solar panels that may be mounted to the apparatus 1.

As the apparatus 1, being in the non-irrigation configuration/mode, is initially moved to the irrigation start position, the conduit 70 connected to the irrigation water supply RIWS is continuously unwound from the reel 50 and laid out on the field F, for example so as to follow a partly curved path, as shown by the broken line in fig. 2, from the remote irrigation water supply RIWS, the laid out part of the conduit 70 following the path moved by the tractor through use of a conduit guiding arrangement 4 attached to the frame 10 at the coupling part 2, as is conventional. During this laying-out, the rotation speed of the reel 50, for unwinding the conduit 70, is preferably adjusted to the ground speed of the tractor, such a by a suitable braking mechanism, such as in that the electric reel drive D1 is disengaged.

Preferably, the path along which the conduit 70 is laid out, and which the apparatus 1 follows when instructed, such as remotely, to return autonomously to the remote irrigation water supply RIWS, is such that areas of the field F to be irrigated by the apparatus 1 do not overlap when the apparatus 1 moves autonomously, slowly, across the field F in the irrigation mode shown in fig. 2, wherein the two boom sections 110, 130 have been turned by respective actuators 201, 202 mounted on the two boom sections 110, 130, so as to extend outwards and away from a respective one of the two opposite sides of the frame 10.

As may be understood, returning of the apparatus 1 to the remote irrigation water supply RIWS in the irrigation mode is normally done without use of any external towing equipment, at the aforementioned ground speed not exceeding 2 km/h at maximum, preferably not exceeding 1 km/h at maximum, depending on the irrigation demands. For this the electric wheel/belt drive D2 is activated by a user, such as remotely, to drive the electrically driven wheels 12, for the apparatus 1 to move along the aforementioned path, normally steered by engagement between the laid-out conduit 70 and the conduit guiding arrangement 4. The electric reel drive D1 is activated at the same time, to wind up the laid-out portion of the tube 70 encountered by the apparatus 1. Normally will flow of water from the remote irrigation water supply RIWS only be initiated at this time.

The inventors have found that the aforementioned slow speed at which the apparatus 1 travels in the irrigation mode allows for the use of a light-weight boom structure 100 that does not necessarily need to be dimensioned to accommodate for high loads that would arise if the apparatus 1 were moved at a high ground speed in the irrigation mode, such as due to a bumpy ground. Such relatively high loads would typically arise if the apparatus 1 were moved in that mode across the field F at a ground speed exceeding 2 km/h.

By, according to the invention, the aforementioned actuators 201, 202 being electrical linear actuators, useful since the boom section 110, 130 may have a relatively small weight per unit length, that are electrically connected to the electrical storage 6 so as to be exclusively powered by stored electrical power, a further reduction in the loads on the boom structure 100 may be achieved in that no hydraulics/pneumatics with heavy actuators is required for turning the two sections 110, 130 of the boom structure 100. By, according to the invention, using the on-board electrical storage 6 to additionally and exclusively power the wheel/belt drive D2 and the reel drive D1, with no use of any on-board hydraulics or other driving means, a light weight apparatus 1 with a long range of movement in the irrigation mode can be provided.

Turning again to fig. 2 shown is the boom structure 100 coupled to the frame 10 and including the aforementioned first elongated boom section 110, second elongated boom section 130 and, optionally, a central section 120 between the first and second boom sections 110, 130. As mentioned, each first and second boom section 110, 130 is turnable relative to the frame 10 between a first position adjacent a respective side of said frame 10, as shown in fig. 1, and a second position extending outwards away from the frame 10, as shown in fig. 2, corresponding to the aforementioned normal modes of operation of the apparatus 1. The plurality of water outlets 104 are mounted to the first and second boom sections 110, 130, preferably along the full length thereof. Preferably, the coupling of the boom structure 100 to the frame 50 includes a pendulum structure 101 and/or a parallelogram structure 101' connected to a central section 120, where provided, and to the frame 10. Any adjustments of those structures 101, 101' relative to the frame 10 during movement or stand still of the apparatus 1 are preferably carried out using a further electric drive (not shown) powered also by the electric storage 6.

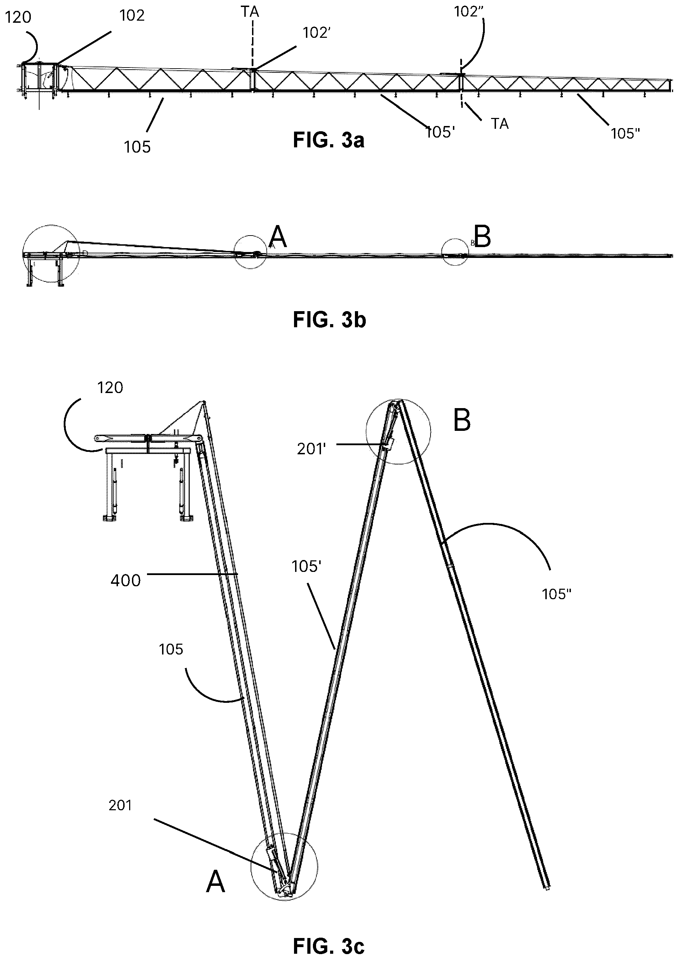

Figs. 3a and 3b are side and top views, respectively, of the first boom section 110 in the field irrigation configuration/mode of one embodiment of the apparatus 1; as will be understood, normally the second boom section 130 will be identical to the first boom section 110, and operated in the same manner. In this preferred embodiment, the two boom sections 110, 130 of the boom structure 100 each comprise at least two, preferably - as shown - three subsections 105, 105', 105" being rotationally/pivotally interconnected at respective subsection couplings 102', 102", the proximal or first subsection 105 near most the frame 10 being pivotally connected at its first end to the frame 10, or to the central section 120, if provided, of the boom structure 100, at a first boom section 110 coupling 102 defining an upright, vertical or more or less vertical turning axis TA. Fig. 3c shows the first boom section 110 of figs. 3a-3b during its transition between the irrigation mode shown in figs. 1 and 3a and the non-irrigation mode shown in fig. 2.

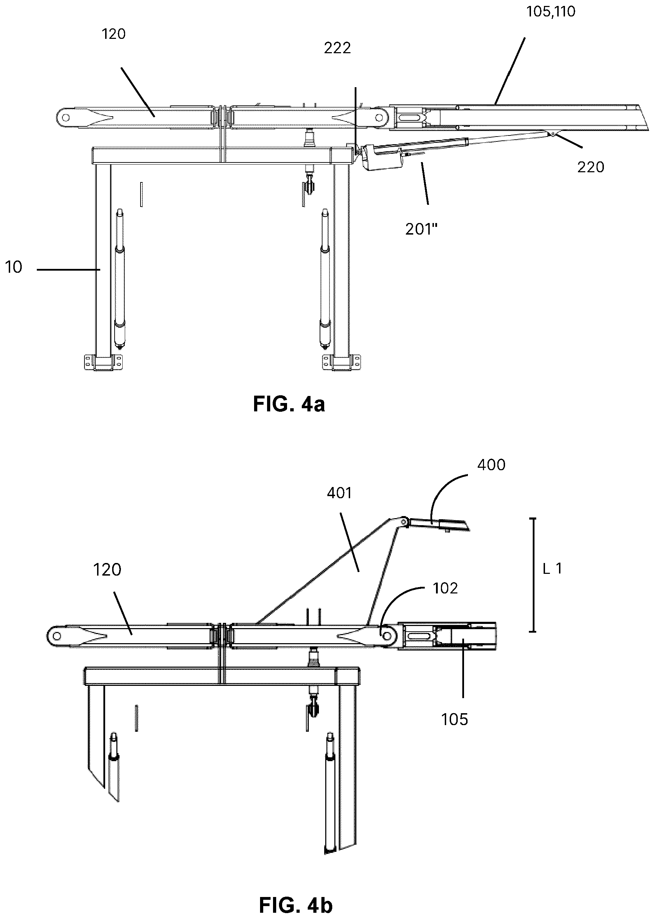

Fig. 4a shows a less preferred embodiment where the first boom section 110 does not comprise the two distal subsections 105', 105" shown in figs. 3a and 3b. A first electrical linear actuator 201" is rotatably attached at one end 220 thereof to the first boom section 110 and a second end 222 of the first electrical linear actuator 201" is rotatably attached to the frame 10, or to the central section 120, as the case may be. As may be understood, a second electrical linear actuator is likewise rotatably attached at one end thereof to the second boom section 130, a second end of the second electrical linear actuator being also rotatably connected to the frame 10, or to the central section 120, as the case may be. Activation of the electrical actuator 201" provides for the aforementioned turning of the two boom sections 110, 130 relative to the frame 10.

Fig. 4b is a top view showing - for the preferred embodiment of figs. 3a-3c - the area of pivotal connection between the central boom section 120 and the end of the proximal or first subsection 105 of the first section 130, including the first boom section 110 coupling 102 as well as a bracket 401 fixed to the central boom section 120 and to which a first end of a rigid bar 400 is rotatably coupled.

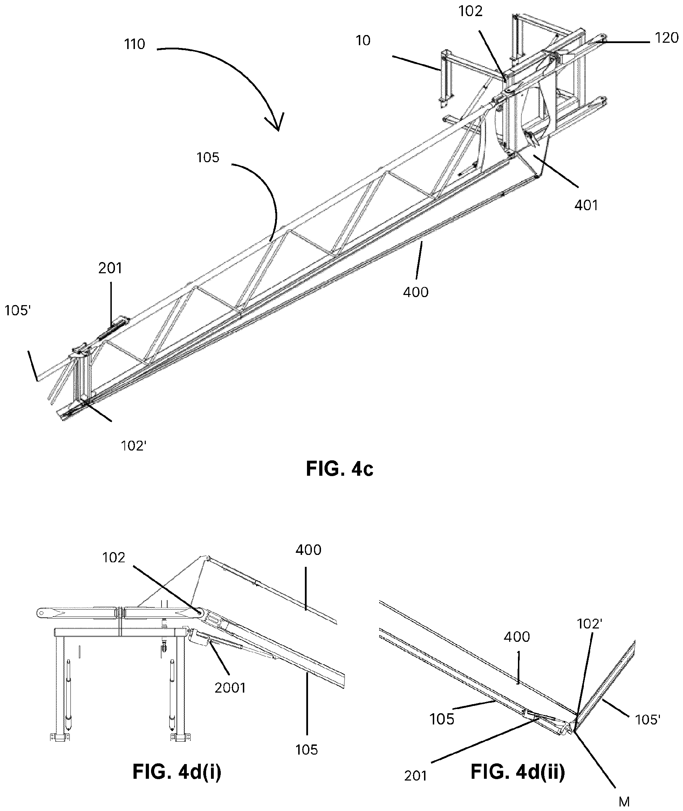

Fig. 4c is a rear view showing the second end of the first subsection 105, near which one end of a first electrical linear actuator 201 is rotatably mounted, in lieu of the actuator 201 " shown in fig. 4a, and serving to turn the first subsection 105 relative to the frame 10 by acting together with the aforementioned bar 400. At its second end is the bar 400 rotatably connected to the shown second subsection 105', near a first subsection coupling 102' at which one end of the second subsection 105' is pivotally connected to the first subsection 105. The first subsection coupling 102' defines an essentially vertical turning axis TA.

The transition shown in fig. 3c is further detailed in figs. 4d-4f, that show enlarged views at the first boom section 110 coupling 102 and at the first subsection coupling 102' (area A in fig. 3b), upon continued operation of the first electrical linear actuator 201 shown in fig. 4c. An auxiliary electrical linear actuator 2001 similar to the actuator denoted 201" in fig. 4a may be provided as shown, but is not strictly necessary for the shown operation, and - hence - is preferably dispensed with.

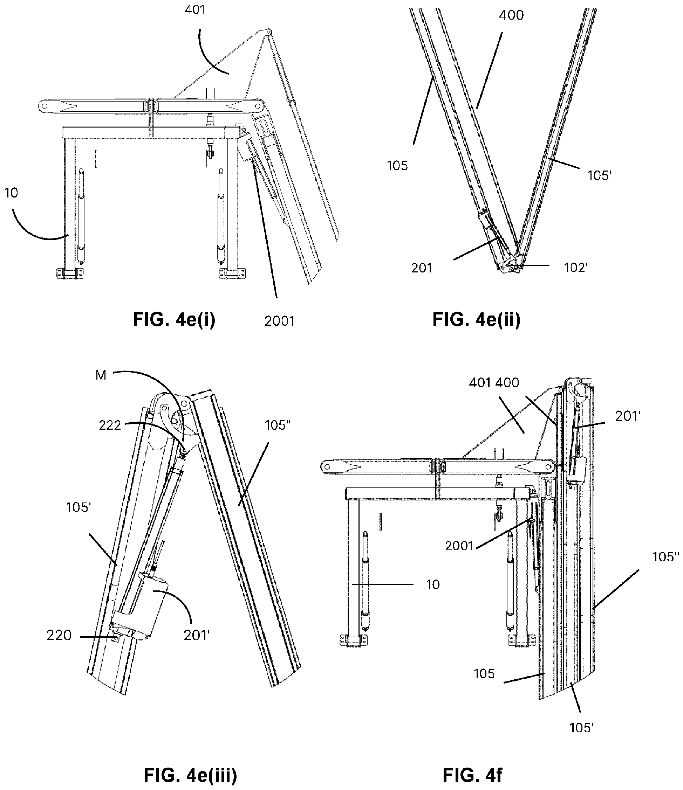

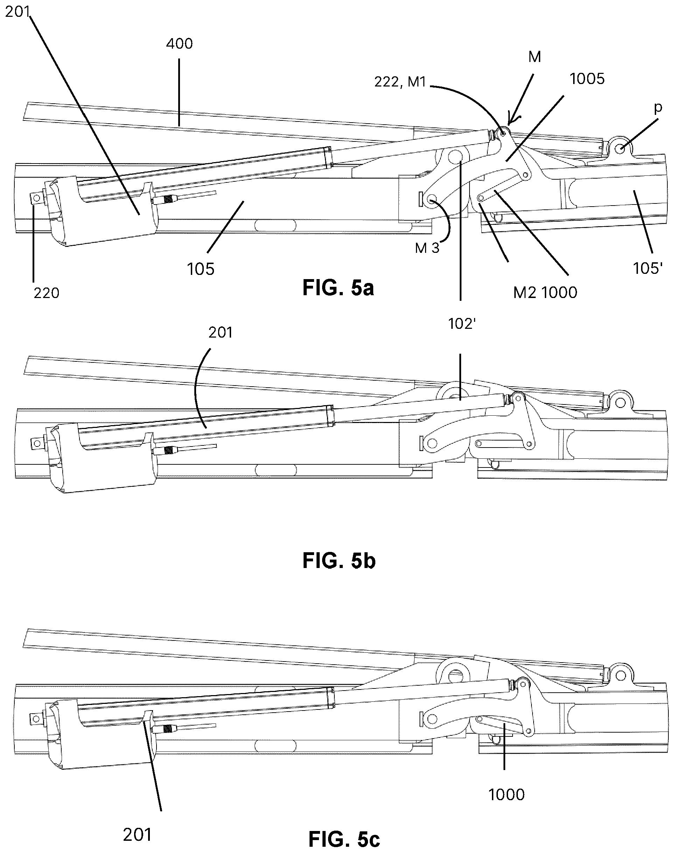

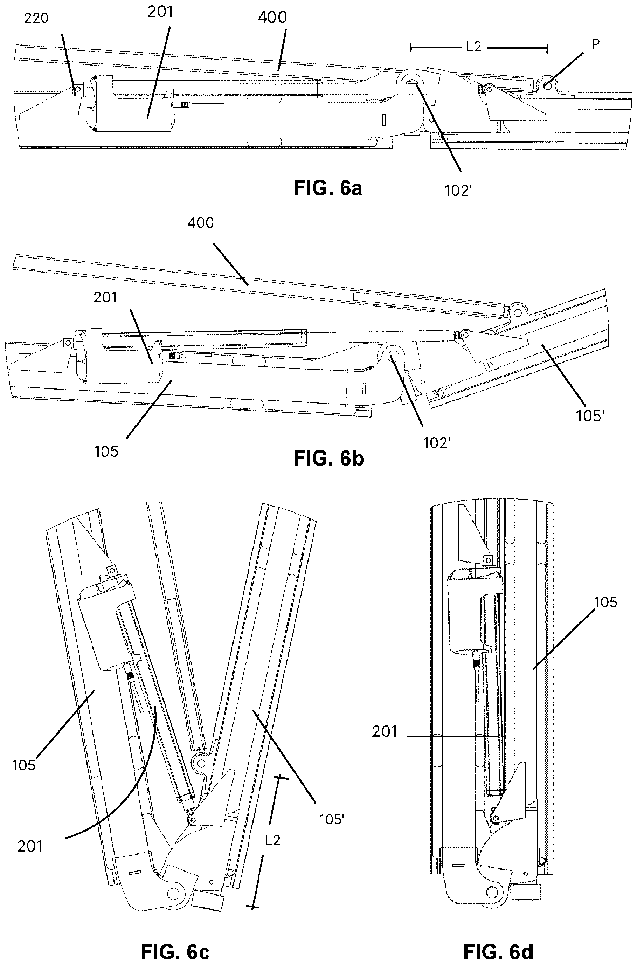

More specifically, figs. 3b and 4c show, for the irrigation mode, a structural triangle being defined by the aforementioned bar 400, the bracket 401, and the length of the first boom section 110 between its coupling 102 to the frame 10 (or central section 120, as the case may be) and the connection P where the bar 400 is rotatably connected to the second subsection 105', see also figs. 5a and 6a. Activation of the first linear actuator 201 to reduce its length of stroke, transforms the structural triangle into a structural parallelogram, where the bar 400, as shown in figs. 2 and 4f, eventually and in the non-irrigation mode of the apparatus 1, extends substantially parallel with the aforementioned length of the first boom section 110 between its coupling 102 to the frame 10 (or to the central section 120, if provided) and the point P where the bar 400 is rotatably connected to the second subsection 105'. The transformation to the final configuration of fig. 4f is illustrated in figs. 4d(i)-4e(ii). For the shown transformation is the distance L1 marked in fig. 4b, between the point of connection of the end of the bar 400 with the bracket 401 on the one hand and the point of connection at coupling 102 between the end of the first subsection 105 and the frame 10, or the central portion 120 as the case may be, configured to correspond to double the distance L2, marked in figs. 6a and 6c, between the first subsection coupling 102' and the point P where the other end of the bar 400 is rotatably connected to the second subsection 105'.

As seen, the action of the electric linear actuator 201 connected to the second subsection 105' brings about a folding of the first section 110, by the electric linear actuator 201 driving the second subsection 105' to rotate about the upright, essentially vertical axis TA defined by the first subsection coupling 102'.

In the irrigation mode shown in figs. 2 and 3a-3b is the first subsection coupling 102' between the first and second subsections 105, 105' optionally locked using a linkage mechanism M shown in more details in figs. 5a-5b, to provide a resistance to rotational movements in addition to that provided by the aforementioned electric linear actuator 201. Release of the lock, brought about by the same linear actuator 201, allows for the structural triangle to then be transformed into the aforementioned structural parallelogram. As shown, a main body 1005 of the linkage mechanism M is pivotally attached at point M1 to the second end 220 of the electric linear actuator 201, and at point M3 to the first subsection 105. An arm 1000 of the linkage mechanism M is pivotally connected at one end to the main body 1005 and at the other end to the second subsection 105', at point M2. When the apparatus 1 is in the irrigation mode, with the second subsection 105' is in extension of the first subsection 105, as shown in fig. 5c, the arm 1000 has been turned by the action of the linear actuator 201 into the locking configuration of the mechanism M, whereby unlocking the coupling 102' requires the linear actuator 201 to move the arm 1000 back to the position shown in fig. 5a, past a neutral position shown in fig. 5b.

It is noted that a linkage as described above is not necessary for operation of the apparatus 1 is the irrigation mode. Other locks may be provided, if deemed necessary. Figs. 6a-6d show an embodiment without the aforementioned linkage, during the transition.

In the preferred embodiment shown in the drawings the first and second sections 110, 130 each comprise a third elongated subsection 105" rotatably connected to the second subsection 105' at a second subsection coupling 102", seen best in fig. 4e(iii) and corresponding to area B of fig. 3b. The second and third subsections 105', 105" of each first and second boom section 110, 130 are turnable relative to one another to a configuration, wherein the second and third subsections 105', 105" are adjacent to one another, as shown in fig.4f. As seen best in figs. 3c, 4eiii) and 4f, a respective further electrical linear actuator 201' connects the second and third subsections 105', 105" of the first and second sections 110, 130 to provide for the relative turning of the second and third subsections 105', 105", with the further electrical linear actuator 201' being also electrically connected to the on-board electrical storage 6 to be powered by stored electrical power. The second subsection couplings 102" may include the aforementioned linkage mechanism M to provide for the described locking function. One end 220 of the further electrical linear actuator 201' is as shown rotatably attached to the second subsection 105' while its second end 222 may be either rotatably directly attached to the third subsection 105", as shown schematically in figs. 6a-6d for the first electrical linear actuator 201, or be rotatably attached to the third subsection 105" via the linkage mechanism M discussed above and shown in fig. 4e(iii), to provide a similar locking function. With each subsection 105, 105', 105" having a length of eg. 6 meters the boom sections 110, 130 may span 18 meters in the extended, irrigation configuration shown in fig. 2.

For the bar 400, which transmits compression and tension, it is noted that in one embodiment it may be provided with some build-in resilience, to accommodate for transverse forces acting on the boom section 110.

Finally it is noted that in one embodiment where the boom sections 110, 130 include subsections, the bar 400 may be dispensed with entirely, in that electrical linear actuators may be provided at each coupling 102, 102', 102", and rotatably connected at each end as shown in fig. 4a and fig. 4e(iii), with or without any locking mechanism M.

## Claims

1. A mobile, electrically powered field irrigation apparatus (1), comprising:
- an on-board electrical storage (6) for storing electrical power,
- a frame (10) including:
a) electrically driven wheels (12) or belts for moving the apparatus (1) across a field (F) in a field (F) irrigation mode of the apparatus (1),
b) a reel (50) supported for rotation about an axis (51'),
c) a flexible conduit (70) wound up on said reel (50) and configured for supplying irrigation water from a remote irrigation water supply (RIWS) to a plurality of irrigation water outlets (104),
d) a reel drive (D1) for said rotation of said reel (50), and
e) an electric drive (D2) for driving said electrically driven wheels (12) or belts in said field irrigation mode of the apparatus (1),
**characterised in**
- a boom structure (100) coupled to said frame (10) and including a first elongated boom section (110), a second elongated boom section (130) and, optionally, a central boom section (120) between said first and second boom sections (110, 130),
- each first and second boom section (110, 130) being turnable relative to said frame (10) between a first position adjacent a respective side of said frame (10) and a second, operative position extending outwards away from said frame (10),
- said plurality of water outlets (104) being mounted to said first and second boom sections (110, 130) along a length thereof,
- a first electrical linear actuator (201, 201 ") rotatably attached at one end (220) thereof to said first boom section (110), to provide for said turning of said first boom section (110) relative to said frame (10),
- a second electrical linear actuator (202, 202") rotatably attached at one end thereof to said second boom section (130), to provide for said turning of said second boom section (130) relative to said frame (10),
- said electrical linear actuators (201, 201", 202, 202") being electrically connected to said electrical storage (6) to be powered by stored electrical power.

2. The apparatus (1) of claim 1, said electric drive (D2) for driving said electrically driven wheels (12) or belts being configured to drive said apparatus (1) at a ground speed not exceeding 2 km/h at maximum, preferably not exceeding 1 km/h at maximum, in said field irrigation mode of the apparatus (1) with said boom sections (110, 130) in said operative position.

3. The apparatus (1) according to claim 1 or 2, said reel drive (D1) being an electric drive, wherein all of said electric wheel/belt drive (D2), said electric reel drive (D1) and said linear actuators (201, 202) are exclusively powered by said on-board electrical storage (6).

4. The apparatus (1) according to any of the previous claims, said first linear actuator (201, 201") and said second linear actuator (202, 202") being rotatably attached at a second end (222) thereof to said frame (10).

5. The apparatus (1) according to any of the previous claims 1-4, said first linear actuator (201, 201") and said second linear actuator (202, 202") being rotatably attached at a second end (222) thereof to said central boom section (120) when included.

6. The apparatus (1) according to claim 1, 2 or 3, said first and second boom sections (110, 130) each comprising a first elongated subsection (105) and a second elongated subsection (105'), said first and second subsections (105, 105') being rotatably connected to one another at a first subsection coupling (102),
- wherein said two subsections (105, 105') of each first and second boom section (110, 130) are turnable relative to one another between a folded configuration, wherein said two subsections (105, 105') are located adjacent to one another, and said operative position, wherein said two subsections (105, 105') are in extension of one another with said first subsection (105) near most said frame (10),
- said first electrical linear actuator (201) being rotatably attached at said one end (220) to the first subsection (105) of said first boom section (110) and at a second end (222) thereof to said second subsection (105') of said first boom section (110),
- said second electrical linear actuator (202) being rotatably attached at said one end (220) to the first subsection (105) of said second boom section (130) and at a second end (222) thereof to said second subsection (105') of said second boom section (130), and
- a respective bar (400) rotatably attached at respective ends thereof to said second subsections (105, 105') and to said frame (10), or to said central section (120) when included,
- said bars (400) each defining with a corresponding boom section (110, 130) a triangular structure in said operative position and defining together with said corresponding boom section a parallelogram structure when said corresponding linear actuator (201, 202) is actuated for folding said boom section (110, 130) to said folded configuration.

7. The apparatus (1) according to claim 1 or 2 or 3, said first and second sections (110, 130) each comprising a first elongated subsection (105) and a second elongated subsection (105'), said first and second subsections (105, 105') being rotatably connected to one another at a first subsection coupling (102),
- wherein the two subsections (105, 105') of each first and second section (110, 130) are turnable relative to one another between a folded configuration, where said two subsections (105, 105') are located adjacent to one another, and said operative position, wherein said two subsections (105, 105') are in extension of one another with said first subsection (105) near most said frame (10),
- said first section couplings (102) each including a linkage mechanism (M),
- said first electrical linear actuator (201) being rotatably attached at said one end (220) to the first subsection (105) of said first section (110) and at a second end (222) thereof to said linkage mechanism (M) of said first subsection coupling (102) of said first section (110),
- said second linear actuator (202) being rotatably attached at said one end (220) to the first subsection (105) of said second section (130) and at a second end (222) to said linkage mechanism (M) of said first subsection coupling (102) of said second section (130), and
- a respective bar (400) rotatably attached to said second subsections (105, 105') and to said frame (10), or to said central section (120) when included.

8. The apparatus (1) according to the previous claim, said linkage mechanisms (M) being rotatably attached to said first subsection (105) and to said second subsection (105'), respectively, said linkage mechanisms (M) locking said subsections (105, 105') against said relative turning of said subsections (105, 105') of each section (110, 130) when in said operative position.

9. The apparatus (1) according to any of claims 1-4, said first and second boom sections (110, 130) each comprising a first elongated subsection (105) and a second elongated subsection, (105'), said first and second subsections (105, 105') being rotatably connected to one another at a first subsection coupling (102),
- wherein the two subsections (105, 105') of each first and second section (110, 130) are turnable relative to one another between a folded configuration, where said two subsections (105, 105') are located adjacent to one another, and said operative position, wherein said two subsections (105, 105') are in extension of one another with said first subsection (105) rearmost said frame (10),
- wherein a respective first electrical linear actuator (201', 202') connects said two subsections (105, 105') to provide for said relative turning of said two subsections (105),
- said respective first electrical linear actuators (201', 202') being electrically connected to said on-board electrical storage (6) to be powered by stored electrical power.

10. The apparatus (1) according to any of the previous claims 6-9, said first and second boom sections (110, 130) each comprising a second subsection coupling (102') and a third elongated subsection (105") rotatably connected to said second subsection (105') at said second coupling (102),
- wherein the second and third subsections (105', 105") of each first and boom second section (110, 130) are turnable relative to one another between a folded configuration, where said second and third subsections (105', 105") are adjacent to one another, and said operative position, wherein said third subsection (105") is in extension of said second subsection (105'),
- wherein a respective electrical linear actuator (201') connects said second and third subsections (105', 105") of said first and second sections (110, 130) to provide for said relative turning of said second and third subsections (105', 105"),
- said respective electrical linear actuators (201', 202") being electrically connected to said on-board electrical storage (6) to be powered by stored electrical power.

11. The apparatus (1) according to any of the previous claims, said boom structure (100) being releasably coupled to said frame (50).

12. The apparatus (1) according to any of the previous claims, said boom structure (100) including said central section (120), said coupling of said boom structure (100) to said frame (50) including a pendulum structure (101) and/or a parallelogram structure (102) connected to said central section (120) and to said frame (50).

13. The apparatus (1) according to any of the previous claims, including a generator connected to a turbine (5), said on-board electrical storage (6) being electrically charged by said turbine (5) driven by water flowing in said conduit (70).

14. The apparatus (1) according to any of the previous claims, said electrical storage (6) preferably being mounted to said frame (10) or to said boom structure (100).
